(19) **Europäisches Patentamt**

**European Patent Office**

**Office européen des brevets**

(11) Numéro de publication : **0 151 056 B1**

(12) **FASCICULE DE BREVET EUROPÉEN**

(45) Date de publication du fascicule du brevet : 19.08.87

(51) Int. Cl.⁴ : **F 16 L 59/12**

(21) Numéro de dépôt : **85400062.7**

(22) Date de dépôt : **15.01.85**

(54) Dispositif de support d'une tuyauterie dont l'épaisseur est faible par rapport au diamètre.

(30) Priorité : **26.01.84 FR 8401184**

(43) Date de publication de la demande : **07.08.85 Bulletin 85/32**

(45) Mention de la délivrance du brevet : **19.08.87 Bulletin 87/34**

(84) Etats contractants désignés : **BE DE GB IT NL**

(56) Documents cités :
**FR-A- 1 344 734**
**FR-A- 2 362 308**
**GB-A-   794 571**
**US-A- 2 304 973**
**US-A- 2 964 064**
**US-A- 3 196 535**

(73) Titulaire : **NOVATOME**
**La Boursidière R.N. 186**
**F-92357 Le Plessis Robinson (FR)**

(72) Inventeur : **Force, Christian**
**29 route de Rambouillet**
**F-91530 St Cheron (FR)**
Inventeur : **Piqueret, Jacques**
**32 résidence Le Bois du Roi**
**F-91940 Les Ulis (FR)**

(74) Mandataire : **Polus, Camille et al**
**c/o Cabinet Lavoix 2, Place d'Estienne d'Orves**
**F-75441 Paris Cedex 09 (FR)**

Jouve, 18, rue St-Denis, 75001 Paris, France

## Description

L'invention concerne un dispositif de support d'une tuyauterie dont l'épaisseur est faible par rapport au diamètre et dont la température en service est élevée et variable.

Dans les réacteurs nucléaires à neutrons rapides, la chaleur produite par le coeur du réacteur est généralement transportée vers les générateurs de vapeur par du sodium liquide circulant dans le circuit secondaire du réacteur. Ce sodium est à une température élevée de l'ordre de 500 °C, cette température étant susceptible de connaître des variations relativement importante pendant le fonctionnement du réacteur. Le sodium du circuit secondaire est à une pression faible de l'ordre de quelques bars (1 bar = $9{,}81 \cdot 10^4$ Pa) et circule dans des tuyauteries de grand diamètre dont l'épaisseur est relativement faible par rapport au diamètre.

Les tuyauteries de transport du sodium secondaire des réacteurs nucléaires à neutrons rapides ont généralement des diamètres supérieurs à un mètre alors que leur épaisseur n'est que de quelques millimètres et au maximum de 20 millimètres. Ceci permet de diminuer la masse d'acier inoxydable nécessaire pour la fabrication du circuit secondaire qui renferme du sodium dont la surpression par rapport à la pression atmosphérique est faible et de réduire les contraintes d'origine thermique. Les principales contraintes subies par les tuyauteries du circuit secondaire proviennent des chocs thermiques qui peuvent être importants, lors de variations rapides de température du sodium liquide.

De telles tuyauteries de grand diamètre et de faible épaisseur ont une faible résistance à l'écrasement et peuvent connaître des variations de diamètre importantes résultant des variations de température du sodium qu'elles transportent. Il en résulte que le supportage de ces tuyauteries dans la centrale nucléaire pose un problème technique difficile à résoudre.

Diverses solutions ont été proposées pour la conception de moyens de support permettant d'absorber les dilatations de la tuyauterie tout en la maintenant efficacement sans créer de contraintes excessives dans sa paroi.

Par exemple, dans FR-A-2.443.011 et FR-A-2.499.202, on a proposé un dispositif de support comportant un collier rigide fixé sur la structure de la centrale entourant la tuyauterie dans sa zone de support. Des moyens de jonction portés par la tuyauterie et le collier rigide respectivement permettent le maintien de la tuyauterie dans le collier. Les moyens de jonction portés par le collier comportent une lame flexible qui peut se déformer sous l'effet des dilatations de la tuyauterie, lorsque le sodium chaud circule dans cette tuyauterie. Des moyens de jonction correspondant aux moyens de jonction flexibles portés par le collier rigide sont fixés par soudure sur la surface extérieure de la tuyauterie. Ces pièces de support soudées sont les éléments les plus fragiles du dispositif de support et ces éléments ne peuvent pas être contrôlés pendant que le circuit secondaire est en service. En outre, les opérations de mise en place des dispositifs de support sont compliquées par la nécessité de réaliser des soudures aussi bien sur la tuyauterie que sur le collier rigide.

Dans le cas de tuyauteries transportant de l'eau ou de la vapeur sous forte pression, par exemple dans les réacteurs nucléaires à eau sous pression, on a également proposé des dispositifs de support comportant un collier rigide fixé sur la structure du réacteur entourant la tuyauterie en ménageant un espace annulaire entre celle-ci et le collier, un élément composite déformable étant intercalé entre le collier et la tuyauterie. Cet élément composite déformable est constitué par un assemblage de tubes croisés disposés à 90° par lits successifs. Un tel dispositif est destiné à absorber une grande quantité d'énergie, en cas de rupture de la tuyauterie, cette énergie étant absorbée par la déformation irréversible des tubes par écrasement. La quantité d'énergie absorbée doit être très importante pour un débattement faible de la tuyauterie par rapport au collier rigide. Il en résulte que les forces appliquées par l'ensemble déformable sur la tuyauterie lorsqu'elle se dilate sont également très importantes. Ces forces ne sont cependant pas susceptibles de déformer la tuyauterie car de tels dispositifs de support sont utilisés pour des tuyauteries de grande épaisseur et de très grande rigidité. Ces dispositifs de support par exemple décrits dans FR-A-2.362.308 sont donc complexes et inadaptés au cas de tuyauteries de faible épaisseur d'un circuit secondaire d'un réacteur nucléaire à neutrons rapides refroidi par du sodium liquide.

Le but de l'invention est donc de proposer un dispositif de support d'une tuyauterie dont l'épaisseur est faible par rapport au diamètre et dont la température en service est élevée et variable, comportant un collier rigide entourant la tuyauterie de façon à ménager un espace annulaire autour de celle-ci, fixé sur l'installation dans laquelle est montée la tuyauterie et un élément annulaire déformable intercalé entre le collier et la tuyauterie, ce dispositif de support pouvant être facilement mis en place et facilement démonté pour son inspection et permettant d'assurer un maintien efficace de la tuyauterie en service sans exercer sur cette tuyauterie des contraintes excessives.

Dans ce but, l'élément annulaire déformable est constitué par au moins deux secteurs annulaires disposés l'un à la suite de l'autre, dans l'espace annulaire autour de la tuyauterie et constitués chacun par :

- deux tôles enveloppes en forme de portions de cylindre limitées par deux génératrices, de rayons sensiblement égaux respectivement, au rayon externe de la tuyauterie et au rayon interne du collier, disposées coaxialement et parallèles et reliées entre elles le long de leurs génératrices d'extrémité,

et une tôle élastique en forme de portion de cylindre dont le rayon est intermédiaire entre les rayons des deux tôles enveloppes disposée coaxialement et parallèlement entre les tôles enveloppes et en appui sur celles-ci par l'intermédiaire d'une pluralité de tiges de direction axiale régulièrement espacées et placées en quinconce de part et d'autre de la tôle élastique.

Afin de bien faire comprendre l'invention, on va maintenant décrire à titre d'exemples non limitatifs, en se référant aux figures jointes en annexe, deux modes de réalisation d'un dispositif de support suivant l'invention destiné au supportage d'une tuyauterie secondaire d'un réacteur nucléaire à neutrons rapides.

La figure 1 est une vue en coupe, par un plan perpendiculaire à l'axe de la tuyauterie, de cette tuyauterie et d'un dispositif de support.

La figure 2 est une vue en coupe suivant AA de la figure 1.

La figure 3 est une vue suivant F de la figure 2 montrant un des composants en forme de secteur circulaire de l'élément déformable.

La figure 4 est une vue en coupe axiale du dispositif de support analogue à la vue en coupe de la figure 2, dans le cas d'une variante de réalisation des composants en forme de secteurs circulaires de l'élément déformable.

La figure 5 est une vue suivant F de la figure 4.

La figure 6 est une vue de dessus du dispositif depuis sa partie interne, montrant en écorché les différentes tôles constituant le dispositif.

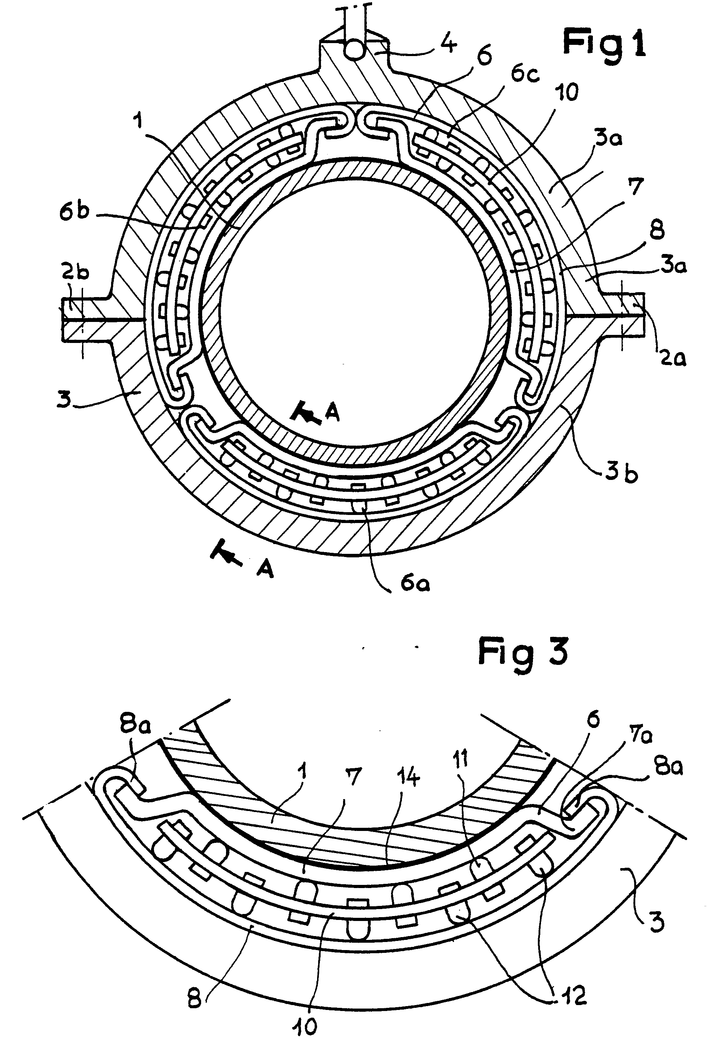

Sur la figure 1, on voit la tuyauterie 1 entourée par le manchon 2 qui lui est coaxial et qui ménage entre la surface extérieure de la tuyauterie 1 et sa surface intérieure un espace annulaire. Le collier 3 est constitué par deux demi-colliers 3a et 3b assemblés grâce à des pattes 2a et 2b. Le collier 3 est fixé sur la structure du réacteur nucléaire dont la tuyauterie 1 constitue une tuyauterie secondaire, par l'intermédiaire des plaques de fixation 2a, 2b et 4, par boulonnage ou ancrage suivant un procédé connu.

Le collier 3 est constitué par une tôle d'épaisseur suffisante pour lui assurer une grande rigidité. Sous l'effet des forces mises en jeu par la dilatation de la tuyauterie 1, le collier rigide 3 ne subit donc aucune déformation notable.

Dans l'espace annulaire ménagé entre la tuyauterie 1 et le collier 3, est intercalé un élément annulaire déformable 6 constitué par trois secteurs 6a, 6b et 6c disposés les uns à la suite des autres et occupant chacun une zone angulaire de 120°. L'élément déformable 6 permet d'accommoder des déformations radiales de la tuyauterie 1 sous l'effet des variations de température du sodium circulant dans la tuyauterie 1.

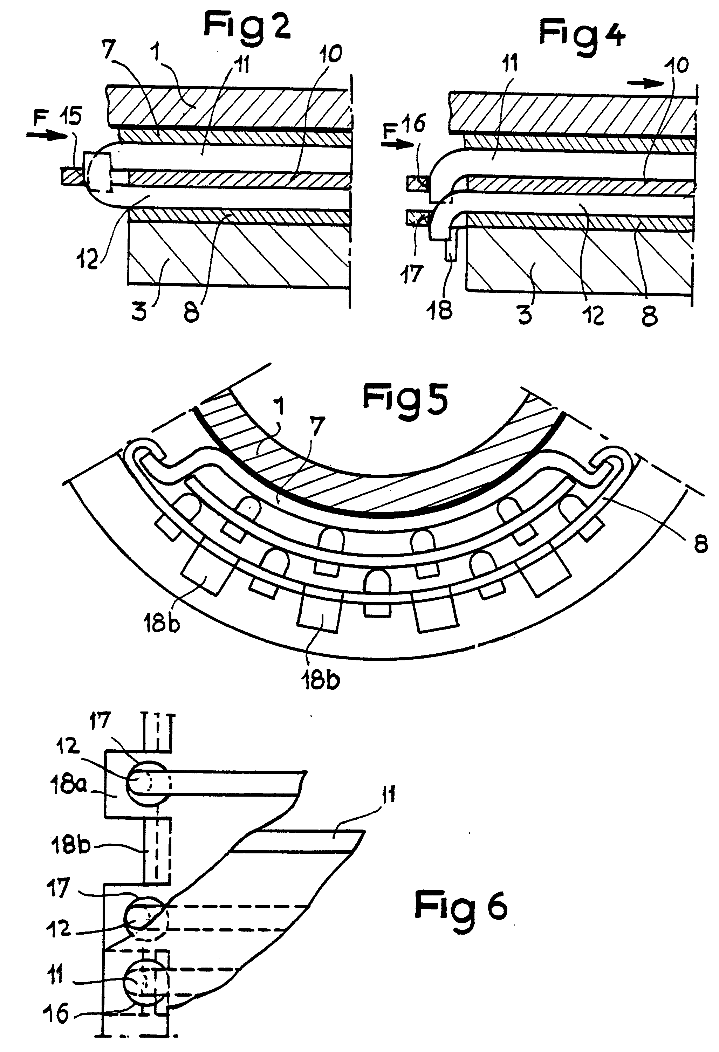

On va décrire l'un des secteurs annulaires 6a, 6b et 6c en se référant aux figures 2 et 3.

Chacun des secteurs annulaires est constitué par deux tôles enveloppes 7 et 8 en forme de portions de cylindre ayant sensiblement pour longueur la longueur du collier 3, dans le sens axial de la tuyauterie 1, et limitées par deux génératrices au voisinage desquelles les deux tôles enveloppes 7 et 8 sont reliées par exemple par agrafage ou par soudage. Sur la figure 3, on voit les extrémités 7a et 8a des enveloppes 7 et 8 respectivement qui ont été repliées pour venir s'engager l'une dans l'autre pour leur assemblage. La tôle enveloppe 7 qui est disposée du côté de la tuyauterie 1 est d'une plus grande épaisseur et d'une plus grande rigidité que la tôle 8 qui est disposée du côté du collier rigide 3. En effet, la rigidité de la tôle 7 permet d'éviter une déformation permanente de la tuyauterie 1 lors de sa dilatation sous l'effet de la température du sodium.

La tôle enveloppe 7 a sensiblement comme rayon le rayon externe de la tuyauterie 1 alors que l'enveloppe 8 a un rayon qui est sensiblement égal au rayon interne du collier 3.

Les secteurs annulaires constituant des composants de l'élément déformable 6 comportent également, comme il est visible aux figures 2 et 3, une paroi intermédiaire 10 constituée par une portion de cylindre dont le rayon est intermédiaire entre les rayons des tôles enveloppes 7 et 8. Cette paroi 10 est constituée par une tôle élastique en appui sur les tôles enveloppes 7 et 8 par l'intermédiaire de tiges 11 et 12 respectivement.

Le collier rigide 3, les tôles enveloppes 7 et 8, la tôle élastique 10 et les tiges 11 et 12 ont sensiblement la même longueur dans la direction axiale. Les tiges 11 et 12 ayant même diamètre, la tôle élastique 10 est placée sensiblement à égale distance des tôles enveloppes 7, 8 et son rayon est sensiblement égal à la demi-somme des rayons des tôles enveloppes 7 et 8.

Les génératrices de contact des tiges 11 et 12 avec la tôle élastique 10 sont sensiblement équidistantes et les points de contact des tiges 11 et 12 respectivement avec la tôle élastique 10 sont disposés en quinconce de part et d'autre de cette tôle élastique 10.

Comme il est visible sur la figure 2, les extrémités des tiges 11 et 12 sont recourbées de façon à être engagées dans des trous 15 ménagés dans la tôle élastique 10, dans une partie de cette tôle qui vient en saillie dans la direction axiale par rapport au collier 3 et aux tôles enveloppes 7 et 8. Les tiges 11 s'engagent dans un premier ensemble de trous 15 équidistants grâce à leur courbure vers le bas et les tiges 12 s'engagent dans un second ensemble de trous 15 également équidistants et intercalés par rapport au premier ensemble de trous 15, grâce à leur courbure dirigée vers le haut.

De cette façon, les tiges 11 et 12 sont maintenues à chacune de leurs extrémités par rapport à la tôle élastique 10. Le maintien de l'ensemble constitué par la tôle élastique 10 et les deux ensembles de tiges 11 et 12 à l'intérieur des tôles enveloppes 7 et 8 peut être assuré uniquement par le serrage au moment du montage du dispositif, lorsque les extrémités des tôles enveloppes 7 et 8 sont assemblées ou par quelques points de soudure entre les tiges et les tôles enveloppes 7 et 8.

Une couche isolante en feutre de fibres réfractaires 14 est intercalée entre la tôle enveloppe 7 et la tuyauterie 1, ce qui permet d'isoler la tuyauterie de la tôle 7.

Lorsque la tuyauterie 1 se dilate, par exemple lors de sa mise en service, lorsque le sodium liquide commence à circuler dans cette tuyauterie, il se produit une déformation radiale de la tuyauterie 1 qui vient appuyer sur l'élément déformable en trois parties 6. La déformation radiale de la tuyauterie 1 est transmise à l'élément déformable par la tôle enveloppe rigide 7 qui produit un déplacement radial de l'ensemble des tiges 11. Les tiges 11 par déplacement radial déforment la tôle élastique 10 qui est en appui de chaque côté de chacune des tiges 11, sur deux tiges 12 elles-mêmes en appui sur la tôle enveloppe 8 maintenue contre le collier rigide 3. Toute la déformation est donc absorbée par la flexion de la tôle 10 au niveau des tiges 11, entre les appuis constitués par les tiges 12.

Par élasticité, la tôle 10 exerce des forces radiales dirigées vers l'intérieur sur la tôle enveloppe 7 et sur la tuyauterie 1 mais ces forces assurant le maintien et le centrage de la tuyauterie 1 dans le collier rigide 3 sont relativement faibles et de toute façon insuffisantes pour produire une déformation de la paroi de la tuyauterie 1 dont l'épaisseur et la rigidité sont très supérieures à l'épaisseur et à la rigidité de la tôle élastique 10.

Les composants en forme de secteurs circulaires 6a, 6b et 6c sont dimensionnés de façon qu'il est possible de les introduire dans l'espace annulaire entre la tuyauterie 1 et le collier rigide 3 sans effort, lorsque la tuyauterie 1 est à la température ambiante et que les deux demi-colliers rigides sont desserrés. Le montage et le démontage des éléments déformables 6 ne posent donc aucun problème et peuvent être réalisés très rapidement, lorsque le circuit secondaire du réacteur nucléaire n'est pas en service. On peut ainsi vérifier ou remplacer très facilement un composant déformable défaillant.

Dans le cas où l'on veut assurer une fixation efficace des composants déformables dans l'espace annulaire entre la tuyauterie et le collier rigide, que la tuyauterie 1 soit en service ou hors service, on pourra recourir au mode de réalisation de ces composants représentés sur les figures 4, 5 et 6.

Sur ces figures on a attribué aux éléments correspondant à ceux représentés sur les figures 2 et 3 les mêmes repères.

Dans le mode de réalisation représenté aux figures 4, 5 et 6, la tôle enveloppe extérieure 8 est saillante de chaque côté du collier rigide 3 de la même façon que la tôle élastique 10. La tôle élastique 10 ne comporte qu'un seul jeu de trous 16 pour l'engagement des extrémités recourbées vers le bas des tiges d'appui 11.

Une partie saillante par rapport au collier rigide 3 de la tôle enveloppe 8 comporte des découpes en créneaux 18 dont une sur deux (18a) est maintenue droite, la seconde 18b étant repliée à 90° vers le bas. Des trous 17 sont prévus dans les parties 18a, ces parties 18a et les trous 17 étant intercalés en quinconce entre les trous 16 de la tôle élastique 10. De cette façon les trous 17 peuvent recevoir les extrémités recourbées vers le bas des tiges 12.

Les parties 18b ne sont recourbées pour la fixation axiale de l'élément déformable sur le collier 3 qu'après l'engagement de cet élément déformable dans l'espace annulaire entre la tuyauterie 1 et le collier 3. De la même façon, les extrémités recourbées des tiges 12 ne sont introduites dans les trous 17 qu'après qu'on ait placé les éléments déformables dans l'espace annulaire.

L'avantage du dispositif représenté aux figures 4, 5 et 6 est que l'élément déformable 6 est parfaitement maintenu à l'intérieur du collier rigide 3. L'inconvénient de ce dispositif est cependant que son démontage pour vérification ou remplacement est moins facile à réaliser que pour le dispositif représenté aux figures 2 et 3.

On voit que les principaux avantages du dispositif de support suivant l'invention sont que ce dispositif réalise un parfait maintien et un parfait centrage de la tuyauterie dans le collier rigide sans que des forces excessives soient exercées sur la tuyauterie et que la mise en place et le démontage de ce dispositif peuvent être réalisés simplement et rapidement pour la vérification ou pour le remplacement d'un de ses composants. Le dispositif de support suivant l'invention est également facile à réaliser et d'un faible coût. Le réglage de ses performances peut être obtenu en choisissant et en ajustant l'épaisseur de la tôle élastique et le diamètre et le pas des deux jeux de tiges d'appui.

Dans le cas d'une tuyauterie d'un diamètre voisin d'un mètre, on peut choisir des tiges circulaires dont le diamètre est compris entre 6 et 8 mm disposées avec un pas compris entre 15 et 20 mm et une tôle en acier élastique ayant une épaisseur un peu inférieure à 5 mm.

Au lieu de trois secteurs annulaires à 120° on peut utiliser deux secteurs à 180° ou encore quatre secteurs à 90°.

On peut réaliser l'assemblage des extrémités des tôles enveloppes autrement que par agrafage ou par soudage. La fixation provisoire ou définitive des divers éléments constituant les secteurs annulaires déformables peut être réalisée par d'autres moyens que l'engagement des tiges dans des trous, le serrage mécanique ou le soudage par points.

Enfin le dispositif de support suivant l'invention s'applique dans tous les cas où l'on veut supporter des tuyauteries dont l'épaisseur est faible par rapport à leur diamètre et qui peuvent être amenées à subir des températures variables entraînant des dilatations radiales de plus ou moins grande amplitude.

**Revendications**

4

1. Dispositif de support d'une tuyauterie dont l'épaisseur est faible par rapport au diamètre et dont la température en service est élevée et variable comportant un collier rigide (3) entourant la tuyauterie (1) de façon à ménager un espace annulaire autour de celle-ci, fixé sur l'installation dans laquelle est montée la tuyauterie (1) et un élément annulaire déformable (6) intercalé entre le collier (3) et la tuyauterie (1), caractérisé par le fait que l'élément annulaire déformable (6) est constitué par au moins deux secteurs annulaires (6a, 6b, 6c) disposés l'un à la suite de l'autre dans l'espace annulaire autour de la tuyauterie (1) et constitués chacun par :

deux tôles enveloppes (7, 8) en forme de portions de cylindre limitées par deux génératrices, de rayons sensiblement égaux respectivement, au rayon externe de la tuyauterie (1) et au rayon interne du collier (3), disposées coaxialement et parallèlement et reliées entre elles le long de leurs génératrices d'extrémité, et une tôle élastique (10) en forme de portion de cylindre dont le rayon est intermédiaire entre les rayons des deux tôles enveloppes (7, 8) disposée coaxialement et parallèlement entre les tôles enveloppes (7, 8) et en appui sur celles-ci par l'intermédiaire d'une pluralité de tiges (11, 12) de direction axiale régulièrement espacées et placées en quinconce de part et d'autre de la tôle élastique (10).

2. Dispositif de support suivant la revendication 1, caractérisé par le fait que les extrémités des tiges (11, 12) sont recourbées et engagées dans des trous (15) ménagés dans des parties de la tôle élastique (10) saillantes par rapport au collier rigide (3), à chacune de ses extrémités axiales.

3. Dispositif de support suivant la revendication 1, caractérisé par le fait que la tôle enveloppe (8) à plus grand rayon située vers le collier rigide (3) est saillante à chacune de ses extrémités axiales par rapport au collier rigide (3) et comporte dans ses parties saillantes des découpes en créneaux (18) dont une sur deux (18a) maintenue droite comporte un trou (17) pour l'engagement de l'extrémité d'une tige (12), les autres découpes (18b) étant recourbées à 90° vers le collier (3) pour le maintien de l'élément déformable (6) à l'intérieur de celui-ci, la tôle élastique (10) comportant des trous (16) pour l'engagement des extrémités recourbées des tiges (11) en contact avec la face de la tôle élastique (10) opposée à la tôle enveloppe (8), les trous (16) étant disposés en quinconce par rapport aux trous (17) d'engagement des extrémités des tiges (12) en contact avec la face de la tôle élastique (10) située du côté de la tôle enveloppe (8).

### Claims

1. A device for supporting a piping whose thickness is small relative to the diameter of the piping and whose temperature in service is elevated and variable, said device comprising a rigid collar (3) surrounding the piping (1) in such manner as to define an annular space around the piping, said collar being fixed to the installation in which the piping (1) is mounted, and a deformable annular element (6) interposed between the collar (3) and the piping (1), characterized by the fact that the deformable annular element (6) comprises at least two annular sectors (6a, 6b, 6c) disposed one after the other in the annular space around the piping (1), each annular sector comprising :

two metal casing sheets (7, 8) in the shape of portions of a cylinder defined by two generatrices and having radii which are respectively substantially equal to the outside radius of the piping (1) and to the inside radius of the collar (3) and being disposed coaxially and parallel to each other and interconnected along their end generatrices, and a metal resilient sheet (10) in the shape of a portion of a cylinder whose radius is intermediate between the radii of the two casing sheets (7, 8), said resilient sheet being disposed coaxially and in parallel relation with and between the casing sheets and bearing against the casing sheets (7, 8) through a plurality of rods (11, 12) which extend in an axial direction and are equally spaced apart and disposed in staggered relation on each side of the resilient sheet (10).

2. A device according to claim 1, characterized by the fact that, end portions of the rods (11, 12) are bent and engaged in apertures (15) provided in portions of the resilient sheet (10) which project from the rigid collar (3) at each of the axial ends of the collar.

3. A device according to claim 1, characterized by the fact that the casing sheet (8) having the larger radius located adjacent to the rigid collar (3) is in projecting relation at each of its axial ends to the rigid collar (3), and includes in the projecting portions thereof crenel-forming cut portions (18), every other crenel (18a) being maintained straight and including an aperture (17) for the engagement of an end portion of a rod (12) and the other crenels (18b) being bent at 90° toward the collar (3) for maintaining the deformable element (6) inside the collar (3), the resilient sheet (10) defining apertures (16) for the engagement of bent end portions of the rods (11) in contact with the side of the resilient sheet (10) opposed to the casing sheet (8), the apertures (16) being disposed in staggered relation to the apertures (17) in which end portions of the rods (12) in contact with the side of the resilient sheet (10) located adjacent to the casing sheet (8) are engaged.

### Patentansprüche

1. Stützvorrichtung für eine Rohrleitung, deren Dicke im Verhältnis zum Durchmesser klein ist und dessen Betriebstemperatur hoch ist und sich ändert, mit einem steifen, die Rohrleitung (1) umgebenden Band (3), wodurch ein Ringraum um die Rohrleitung gebildet wird und das Band an der Einrichtung befestigt ist, in der die Rohrleitung (1) und ein ringförmiges, verformbares Element (6), das zwischen dem Band (3) und der Rohrleitung (1) zwischengeschaltet ist, angeordnet sind, dadurch gekennzeichnet, daß das verformbare ringförmige Element (6) aus mindestens zwei ringförmigen Sektorelementen (6a, 6b, 6c) besteht, die aufeinanderfolgend im Ringraum um die Rohrleitung (1) angeordnet sind und jeweils bestehen aus :

zwei Hüllblechen (7, 8) in Form von Zylinderausschnitten, die durch zwei erzeugende begrenzt sind mit Radien, die jeweils ungefähr gleich dem Außenradius der Rohrleitung (1) und dem Innenradius des Bandes (3) entsprechen und wobei die Hüllbleche koaxial und parallel untereinander entlang ihrer erzeugenden an den Enden verbunden sind, und einem elastischen Blech (10) in Form eines Zylinderausschnittes, dessen Radius zwischen den Radien der beiden Hüllbleche (7, 8) liegt und das koaxial und parallel zwischen den Hüllblechen (7, 8) liegt und gegen diese übermehrere Stangen (11, 12) mit axialer Richtung, die gleichmäßig verteilt und abwechselnd zu beiden Seiten des elastischen Bleches (10) angeordnet sind, in Berührung steht.

2. Vorrichtung nach Anspruch 1 dadurch gekennzeichnet, daß die Enden der Stangen (11, 12) umgebogen und in Löcher (15) eingefügt sind, die in den Teilen des elastischen Bleches (10) vorgesehen sind, die gegenüber dem steifen Band (3) an jedem seiner axialen Enden hervorstehen.

3. Vorrichtung nach Anspruch 1, dadurch gekennzeichnet, daß das Hüllblech (8) mit größerem Radius, das zum steifen Band (3) hin gelegen ist, an jedem seiner axialen Enden gegenüber dem steifen Band (3) übersteht und an seinen überstehenden Bereichen Ausschnitte und Zinken (18) hat, von denen abwechselnd eine von zweien (18a) gerade gehalten wird und ein Loch (17) zum Eingreifen des Endes einer Stange (12) aufweist und die anderen Ausschnitte (18b) um 90° zum Band (3) hin gebogen sind, um das verformbare Element (6) in dessen Innerem (6) zu behalten und das elastische Blech (10) Löcher (16) zum Einfügen der umgebogenen Enden der Stangen (11), die in Berührung mit der Seite des elastischen Bleches (10) stehen, aufweist, wobei die Löcher (16) versetzt gegenüber den Löchern (17) angeordnet sind, die zum Eingreifen der Enden der Stangen (12) dienen, die in Kontakt mit der Seite des elastischen Bleches (10) stehen, die auf der Seite des Hüllbleches (8) gelegen ist.

Fig 1

0 151 056

Fig 3

Fig 2

Fig 4

Fig 5

Fig 6